# EUROPÄISCHE PATENTSCHRIFT

(11) **EP 4 179 393 B1**
(45) Veröffentlichungstag und Bekanntmachung des Hinweises auf die Patenterteilung: **03.09.2025**
(21) Anmeldenummer: 20739961.9
(22) Anmeldetag: 10.07.2020
(51) Int. Cl.: G05B 19/042, G05B 23/02

(54) **(RGB) LEUCHTRING AN ZWEILEITERSENSOR**
(RGB) LIGHT RING ON TWO-CONDUCTOR SENSOR
ANNEAU LUMINEUX (RVB) SUR UN CAPTEUR À DEUX CONDUCTEURS

(43) Veröffentlichungstag der Anmeldung: 17.05.2023
(73) Patentinhaber: VEGA Grieshaber KG, 77709 Wolfach (DE)
(72) Erfinder: KÖRNLE, Ralf, 77736 Zell a.H. (DE); LAUN, Robert, 77756 Hausach (DE); HAAS, Jürgen, 77709 Oberwolfach (DE); ILG, Thomas, 77716 Haslach (DE); HARTER, Matthias, 77773 Schenkenzell (DE); WALDECKER, Natalie, 77799 Ortenberg (DE); RANK, Fabian, 77709 Wolfach (DE)
(74) Vertreter: Patentanwälte Bauer Vorberg Kayser
(86) Internationale Anmeldenummer: PCT/EP2020/069539
(87) Internationale Veröffentlichungsnummer: WO 2022/008071

(56) Entgegenhaltungen:
- EP-A1- 1 591 977
- EP-A1- 3 502 810
- EP-B1- 1 591 977
- DE-A1- 102015 122 278

## Beschreibung

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen. Häufig sind solche Feldgeräte mit übergeordneten Einheiten, zum Beispiel Leitsystemen oder Steuereinheiten, verbunden. Diese übergeordneten Einheiten dienen zur Prozesssteuerung, Prozessvisualisierung und/oder Prozessüberwachung.

Hierfür sind sogenannte Vierleiter-Feldgeräte ein weitverbreiteter Standard. Bei diesen Vierleiter-Feldgeräten erfolgt eine Signalübertragung zwischen Feldgerät und übergeordneten Einheiten über ein erstes Paar Anschlussleitungen nach dem bekannten 4 mA bis 20 mA Standard. Zusätzlich zu der analogen Übertragung von Signalen besteht die Möglichkeit, dass die Messgeräte gemäß verschiedenen anderen Protokollen, insbesondere digitalen Protokollen, weitere Informationen an die übergeordnete Einheit übermitteln oder von dieser empfangen. Beispielhaft seien hierfür das HART-Protokoll oder das Profibus-PA-Protokoll genannt. Weiterhin kann die Versorgung und digitale Kommunikation nach dem in Arbeit befindlichen und auf Ethernet basierenden Zweileiter-Standard APL realisiert werden (APL = Advanced Physical Layer).

Die Energieversorgung dieser Feldgeräte erfolgt über ein zweites Paar Anschlussleitungen, sodass insgesamt vier Anschlussleitungen zur Signal- und Energieübertragung notwendig sind. Diese vier Anschlussleitungen sind Namensgebend für die Vierleiter-Feldgeräte.

Aus dem Stand der Technik sind ferner sogenannte Zweileiter-Feldgeräte bekannt.

Bei Zweileiter-Feldgeräten erfolgt sowohl die Signalübertragung zwischen Feldgerät und übergeordneter Einheit als auch die Energieversorgung des Feldgeräts über das 4 mA bis 20 mA Stromsignal, sodass neben der Zweidrahtleitung keine zusätzliche Versorgungsleitung notwendig ist. Um den Verdrahtungs- und Installationsaufwand sowie die Sicherheitsmaßnahmen, beispielsweise beim Einsatz in explosionsgeschützten Bereichen, so gering wie möglich zu halten, ist es auch nicht gewünscht, zusätzliche Stromversorgungsleitungen vorzusehen.

Bei Zweileiter-Feldgeräten ist die zur Verfügung stehende Eingangsleistung erheblich beschränkt. Die Elektronik im Feldgerät muss so ausgelegt sein, dass sie auch bei einem minimalen Signalstrom von 4 mA noch zuverlässig arbeitet.

Weiterer Stand der Technik ist den Dokumenten EP 1 591 977 A1, DE 10 2015 122 278 A1, und EP 3 502 810 A1 zu entnehmen.

Zunehmend wird für Feldgeräte immer häufiger eine Fernablesbarkeit gefordert, die mittels einfacher Leuchtsignale, vergleichbar einer Verkehrsampel, einen Zustand des Feldgerätes oder das Über- oder Unterschreiten eines vorher festgelegten Mess- oder Grenzwertes signalisiert, da auf diese Weise, ohne an dem Feldgerät vor Ort sein zu müssen oder eine Funkverbindung zu diesem aufzubauen, eine erste Information über den Zustand des Feldgerätes verfügbar gemacht werden kann. Bei Zweileiter-Feldgeräten ist dies aufgrund der begrenzt verfügbaren Energie jedoch bislang nicht möglich.

Dies wird im Stand der Technik als Nachteil empfunden.

Hier setzt die vorliegende Erfindung an.

Es ist die Aufgabe der Erfindung, ein Feldgerät aus dem Stand der Technik derart weiter zu bilden, dass es die oben beschriebenen Nachteile nicht aufweist.

Diese Aufgabe wird gelöst durch ein Zweileiter-Feldgerät mit den Merkmalen des Patentanspruchs 1.

Ein erfindungsgemäßes Zweileiter-Feldgerät mit einem Messumformer zur Erfassung einer Messgröße, einer Elektronikeinheit zur Verarbeitung von Messdaten des Messumformers und einer Zweileiterschnittstelle zur Energieversorgung des Zweileiter-Feldgeräts und zur Kommunikation mit einer übergeordneten Einheit, wobei das Zweileiter-Feldgerät eine visuell fernablesbare Anzeigeeinheit zur Signalisierung eines Zustands des Zweileiter-Feldgeräts aufweist, welche aus einer Entfernung von wenigstens 1 m fernablesbar ist, zeichnet sich dadurch aus, dass die Anzeigeeinheit als RGB-Leuchtmittel, vorzugsweise RGB-Leuchtdiode, ausgebildet ist, und wobei die Anzeigeeinheit mit einem Leuchtring derart gekoppelt ist, dass das von der Anzeigeeinheit erzeugte Licht optisch in den Leuchtring eingekoppelt wird.

Erfindungsgemäß ist das gesamte Zweileiter-Feldgerät inklusive der visuell fernablesbaren Anzeigeeinheit vollständig über die Zweidrahtleitung und die damit realisierte 4 mA bis 20 mA Stromschleife mit Energie versorgt.

Eine visuell fernablesbare Anzeigeeinheit liegt gemäß der vorliegenden Erfindung dann vor, wenn eine Fernablesbarkeit aus einer Entfernung von wenigstens 1m vorliegt. Dies kann bspw. dadurch erreicht werden, dass eine optische Wiedergabe mit einer Fläche von wenigstens 10 cm² und einem Lichtstrom von wenigstens 10 Lumen erfolgt.

Der Zustand eines Feldgeräts umfasst gemäß der vorliegenden Anmeldung nicht nur Zustandsmeldungen (Warnung, Fehler, etc.) im eigentlichen Sinne, sondern kann auch Informationen zu Messwerten wie Dichte, Füllstand oder Grenzstand umfassen. So kann bspw. die Dichte oder der Füllstand eines Mediums durch einen Farbverlauf oder das Erreichen eines Grenzstandes durch Anzeigen einer Farbe signalisiert wird.

Zweileiter-Feldgeräte weisen bspw. im Vergleich zu Vierleiter-Feldgeräten einen erheblich reduzierten Aufwand für Installation und Verdrahtung auf. Bei Zweileiterfeldgeräten entfällt die zusätzliche Installation und Verdrahtung einer Versorgungsspannung komplett, da diese, wie oben dargestellt über die Zweidrahtleitung erfolgt. Dies bietet insbesondere in Anwendungen, in denen Vorschriften zum Explosionsschutz zu beachten sind, erhebliche Vorteile, da die separaten Leitungen für die Versorgungsspannung und die dafür erforderlichen zusätzlichen Komponenten schon bei der Planung zu berücksichtigen sind.

Zweileiter-Feldgeräte können ferner eigensicher ausgestaltet werden und haben damit einen erweiterten Einsatzbereich in explosionsgeschützten (Ex-) Bereichen. Wartungsarbeiten an Feldgeräten in Ex-Bereichen sind bei Zweileiterfeldgeräten deutlich einfacher und sicherer als bspw. bei Vierleiterfeldgeräten, da sie gefahrlos auch bei laufendem Messbetrieb erfolgen können. Bei Vierleiter-Feldgeräten hingegen muss zunächst die Stromversorgung unterbrochen und gegen Wiedereinschaltung gesichert werden. Dies erfolgt in aller Regel in den Anschlussräumen, die sich oft in großer Entfernung von der Messstelle befinden.

Erfindungsgemäß ist die Anzeigeeinheit als RGB-Leuchtmittel, vorzugsweise RGB-Leuchtdiode, ausgebildet.

In einer vorteilhaften Weiterbildung ist die Anzeigeeinheit derart ausgebildet und angesteuert, dass zur Signalisierung des Zustands eine Vielzahl von Farben, vorzugsweise wenigstens drei unterschiedliche Farben, weiter bevorzugt wenigstens 16 unterschiedliche Farben, weiter bevorzugt wenigstens 256 unterschiedliche Farben, erzeugbar sind.

Es kann dabei insbesondere vorteilhaft sein, wenn das Anzeige- und/oder Bedienmodul wenigstens drei Farben zur Signalisierung eines Status des Feldgerätes sowie eine vierte Farbe zur Signalisierung einer erfolgreich aufgebauten Funkverbindung aufweist. Dies kann mittels eines RGB-Leuchtmittels einfach realisiert werden.

Üblicherweise werden von Feldgeräten gemäß der NAMUR Empfehlungen NE 044 "Vereinheitlichung von Statusanzeigen an PLT-Geräten mit Hilfe von Leuchtdioden" Stand 03.02.2003 und NE 107 "Selbstüberwachung und Diagnose von Feldgeräten" Stand 10.04.2017, durch rote, gelbe und grüne Leuchtsignale Informationen über z.B. eine Versorgung des Geräts, einen Geräteausfall, einen Gerätestatus, oder binäre Schaltzustände ausgegeben, diese können vorliegend fernablesbar wiedergegeben werden.

Durch das Vorsehen wenigstens einer optionalen weiteren Farbe für die fernablesbare Anzeige kann bspw. zusätzlich der Status einer Funkverbindung wiedergegeben werden. Bspw. kann durch eine blaue Signalisierung ein erfolgreicher Aufbau einer Funkverbindung signalisiert werden. Dies kann insbesondere dann vorteilhaft sein, wenn in einem Bereich mehrere Feldgeräte mit einem Funkmodul angeordnet sind. Durch die Signalisierung kann sichergestellt werden, dass die Funkverbindung mit dem korrekten Feldgerät hergestellt wurde.

Die "NAMUR - Interessengemeinschaft Automatisierungstechnik der Prozessindustrie", kurz NAMUR, ist eine Interessenvertretung von Anwendern der Mess- und Regelungstechnik in der chemischen Industrie deren Ziel unter anderem die Definition von Mindestanforderungen an Geräte und Systeme ist. In diesem Zusammenhang gibt die NAMUR sog. Empfehlung ab, in denen entsprechende Mindestanforderungen definiert sind.

Die Anzeigeeinheit kann ferner derart ausgebildet und angesteuert sein, dass eine Signalisierung des Zustands des Feldgeräts zusätzlich oder alternative durch Blinken der Anzeigeeinheit mit unterschiedlichen Frequenzen und/oder Sequenzen erfolgt.

Durch eine Blinklogik mit unterschiedlichen Frequenzen und/oder Sequenzen für eine der vorhandenen Farben können zusätzlich zu den mit dem menschlichen Auge unterscheidbaren Farbabstufungen weitere Informationen fernablesbar zur Verfügung gestellt werden.

Ein hinsichtlich der Fernablesbarkeit optimal an Anwendervorgaben anpassbares Zweileiter-Feldgerät kann dadurch erreicht werden, dass die Farben zur Signalisierung unterschiedlicher Zustände frei definierbar und/oder zuordenbar sind. Das bedeutet, dass der Anwender bspw. bei einer Inbetriebnahme des Zweileiterfeldgeräts festlegen kann, welche Farben für welches Ereignis ausgegeben werden. Diese freie Konfigurierbarkeit kann aber bspw. durch die o.g. NAMUR-Farbcodierung eingeschränkt werden. D.h. dass es vorgesehen sein kann, dass die seitens der NAMUR vorgegebenen und festgelegten Farben nicht für eine Signalisierung anderer Ereignisse und/oder Zustände verwendet werden dürfen.

Um eine vergrößerte Abstrahlfläche sowie eine Signalisierung in mehr als eine Richtung zu erreichen, ist es erfindungsgemäß vorgesehen, dass die Anzeigeeinheit mit einem Leuchtring gekoppelt ist.

Mittels eines Leuchtrings kann eine Abstrahlung zur Gewährleistung der Fernablesbarkeit in Radialrichtung des Leuchtrings 360° betragen. Zusätzlich kann der Leuchtring auch in Axialrichtung abstrahlen.

Vorzugsweise erfolgt die optische Wiedergabe wenigstens in zwei Raumrichtungen, vorzugsweise in Axialrichtung und Radialrichtung des Leuchtrings, der bspw. als Hohlzylinder, Kugelring oder Torus ausgebildet sein kann.

Eine besonders einfache Ausgestaltung kann erreicht werden, wenn der Leuchtring als Teil eines Deckels oder Gehäuses des Zweileiter-Feldgeräts ausgebildet ist. Bspw. kann der Deckel des Zweileiter-Feldgeräts aus einem Lichtleitenden Material gefertigt sein und so insgesamt als Teil der Anzeigeeinheit ausgebildet sein.

Zusätzlich oder alternativ kann die Anzeigeeinheit mit einem Leuchtband gekoppelt sein. Ein Leuchtband in diesem Sinne ist eine langgestreckte Vorrichtung zur Lichtleitung und -abgabe. Ein Leuchtband in diesem Sinne kann bspw.
dem Feldgerät angeordnet sein. Bspw. kann das Leuchtband entlang einer Längserstreckung des Feldgeräts angeordnet und vorteilhafterweise in ein Gehäuse oder eine Außenhaut des Feldgeräts integriert sein.

Der Messumformer des Feldgeräts kann bspw. als radiometrischer Sensor, Radarsensor, Vibrationssensor oder Drucksensor ausgebildet sein.

Vorteilhafte Ausgestaltungen und Varianten der Erfindung ergeben sich aus den Unteransprüchen und der nachfolgenden Beschreibung. Die in den Unteransprüchen einzeln aufgeführten Merkmale können in beliebiger, technisch sinnvoller Weise miteinander als auch mit den in der nachfolgenden Beschreibung näher erläuterten Merkmale kombiniert werden und andere vorteilhafte Ausführungsvarianten der Erfindung darstellen.

Die vorliegende Erfindung wird nachfolgend anhand von Ausführungsbeispielen unter Bezugnahme auf die beigefügten Figuren eingehend erläutert. Es zeigen:
- Figur 1: ein erstes Ausführungsbeispiel eines Zweileiter-Feldgeräts gemäß der vorliegenden Anmeldung,
- Figur 2: ein zweites Ausführungsbeispiel eines Zweileiter-Feldgeräts gemäß der vorliegenden Anmeldung und
- Figur 3: ein drittes Ausführungsbeispiel eines Zweileiter-Feldgeräts gemäß der vorliegenden Anmeldung,

In den Figuren bezeichnen - soweit nicht anders angegeben - gleiche Bezugszeichen gleiche oder einander entsprechende Komponenten mit gleicher Funktion.

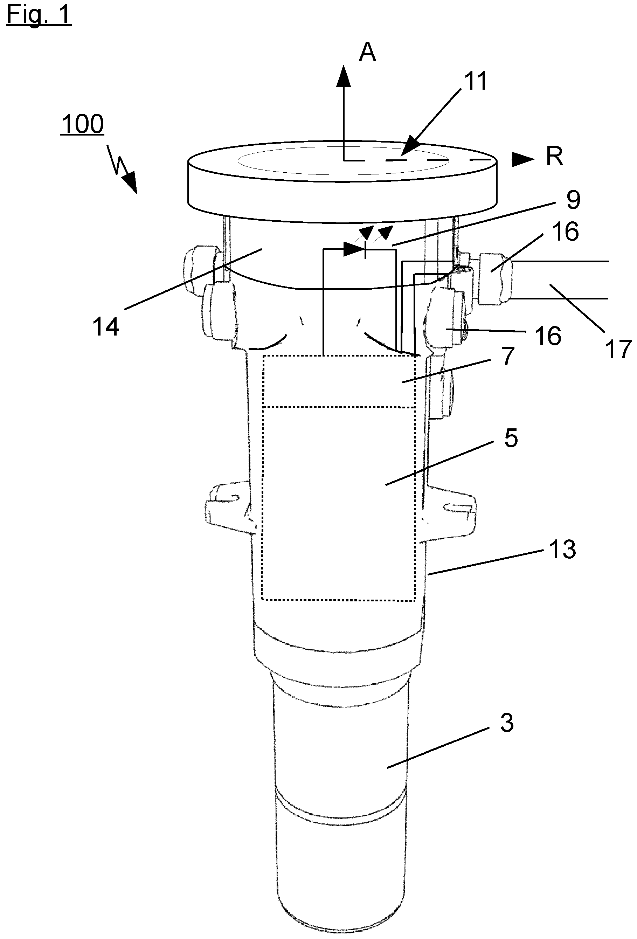

Figur 1 zeigt ein erstes Ausführungsbeispiel eines Zweileiter-Feldgeräts 100 gemäß der vorliegenden Anmeldung.

Das Zweileiter-Feldgerät 100 ist im vorliegenden Ausführungsbeispiel als radiometrische Messeinrichtung zur Erfassung radioaktiver Strahlung ausgebildet und weist einen Messumformer drei auf, der im vorliegenden Ausführungsbeispiel als Szintillationszähler ausgebildet ist. Der Szintillationszähler ist mit einer Elektronikeinheit 5 gekoppelt, die eine Auswertung und Aufbereitung der von dem Messumformer 3 zur Verfügung gestellten Messdaten durchführt und diese ausgangsseitig über eine Zweileiterschnittstelle 7 zur Verfügung stellt.

Über die Zweileiterschnittstelle 7 ist das Zweileiter-Feldgerät 100 über eine Zweidrahtleitung 17 mit einer übergeordneten Einheit, beispielsweise eine Leitwarte, verbunden. Das Zweileiter-Feldgerät 100 wird über die Zweidrahtleitung 17 und einen darüber ausgebildete Stromschleife vollständig mit Energie versorgt und übermittelt die Messwerte nach dem bekannten 4 mA bis 20 mA Standard sowie optional zusätzlich nach einem digitalen Standard, beispielsweise gemäß dem HART-Protokoll.

An dem Deckel 14 ist an einem von dem Gehäuse 13 wegweisenden Ende ein Leuchtring 11 angeordnet, der mit einer als RGB-Leuchtdiode ausgebildeten Anzeigeeinheit 9 gekoppelt ist. Gekoppelt bedeutet in diesem Zusammenhang, dass von der Anzeigeeinheit 9 erzeugtes Licht optisch in den Leuchtring 11 eingekoppelt wird.

Die Elektronikeinheit 5 mit der Zweileiterschnittstelle 7 sind in einem Gehäuse 13 des Zweileiter-Feldgeräts 100 untergebracht. Das Gehäuse 13 ist im Wesentlichen hohlzylindrisch ausgebildet und weist eine oder mehrere Kabeldurchführung 16 auf, von denen durch eine die Zweidrahtleitung 17 nach außen geführt ist. Einenends ist an dem Gehäuse 13 der Messumformer 3 angeordnet, anderenends ist das Gehäuse 13 durch einen Deckel 14 verschlossen.

Der Leuchtring 11 ist dabei derart ausgestaltet, dass von der Anzeigeeinheit 9 in den Leuchtring 11 eingekoppeltes Licht derart geleitet und gestreut wird, dass der gesamten Leuchte verhilft das eingekoppelte Licht zumindest in radialer Richtung gleichmäßig abstrahlt.

Das vorliegende Zweileiter-Feldgerät 100 ist vollständig aus der über die Zweidrahtleitung 17 ausgebildeten Stromschleife mit Energie versorgt und weist keine zusätzlichen internen oder externen Energiequellen auf.

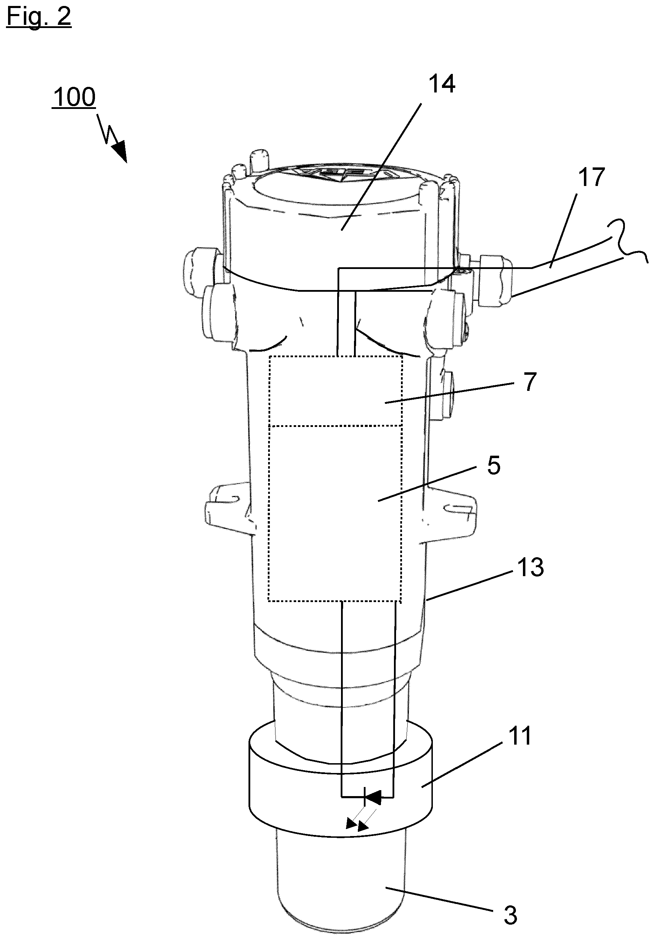

Figur 2 zeigt ein zweites Ausführungsbeispiel eines Zweileiter-Feldgeräts 100 gemäß der vorliegenden Anmeldung.

Das Zweileiter-Feldgerät 100 gemäß Figur 2 entspricht in seinem grundsätzlichen Aufbau dem des Zweileiter-Feldgeräts 100 gemäß Figur 1 und unterscheidet sich lediglich durch eine abweichende Anordnung des Leuchtrings 11 sowie die daraus resultierende abweichende Ausgestaltung des Deckels 14.

Im Unterschied zu dem in Figur 1 dargestellten Ausführungsbeispiel ist bei der vorliegenden Ausführungsform der Leuchtring 11 auf eine zu dem Messumformer 3 weisenden Seite des Gehäuses 13 angeordnet und dementsprechend der Deckel 14 im Originalzustand.

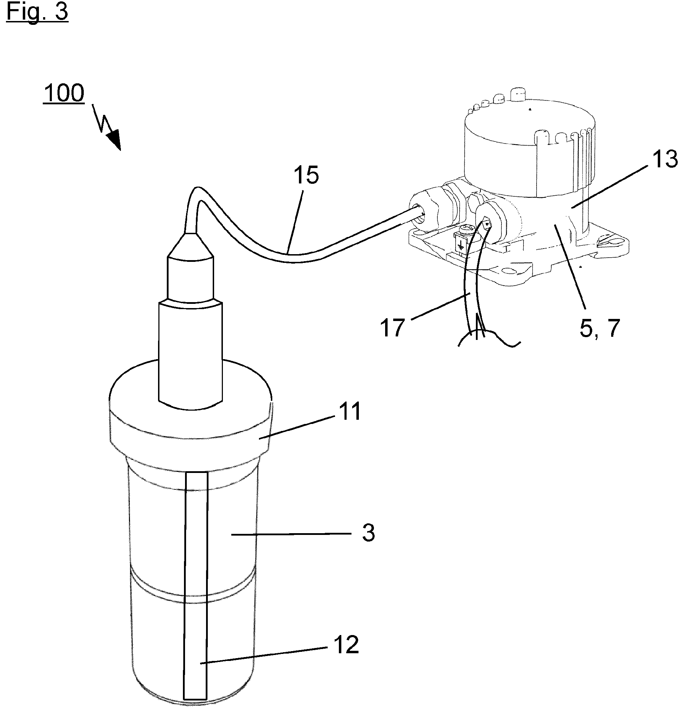

Figur 3 zeigt ein weiteres Ausführungsbeispiel eines Zweileiter-Feldgeräts 100 gemäß der vorliegenden Anmeldung.

Bei dem in Figur 3 dargestellten Zweileiter-Feldgerät 100 ist der Messumformer 3 von dem in Gehäuse 13, in dem die Elektronikeinheit 5 mit der Zweileiterschnittstelle 7 angeordnet sind, abgesetzt ausgebildet. Im vorliegenden Ausführungsbeispiel ist daher der Messumformer 3 über ein Verbindungskabel 15 mit der Elektronikeinheit 5 in dem Gehäuse 13 verbunden. An dem Messumformer 3 ist ferner der Leuchtring 11 angeordnet, der mit einer über das Verbindungskabel 15 gespeisten und als Leuchtdiode ausgebildeten Anzeigeeinheit 9 optisch gekoppelt ist. Die Zweileiterschnittstelle 7 ist ihrerseits über die Zweidrahtleitung 17 mit der übergeordneten Einheit verbunden, sodass das Zweileiter-Feldgerät 100 vollständig über die Zweidrahtleitung 17 mit Energie versorgt ist.

Alternativ kann der Leuchtring 11 auch an dem abgesetzten Teil des Gehäuses 13 angeordnet sein.

Der Leuchtring 11 ist im vorliegenden Ausführungsbeispiel ferner durch ein Leuchtband 12, dass sich entlang einer Längsachse des Druckmessumformers 3 auf eine Mantelfläche des Messumformer in Axialrichtung erstreckt, ergänzt.

### Bezugszeichenliste

- 3: Messumformer

- 5: Elektronikeinheit

- 7: Zweileiterschnittstelle

- 9: Anzeigeeinheit

- 11: Leuchtring
- 12: Leuchtband
- 13: Gehäuse
- 14: Deckel
- 15: Verbindungshebel

- 17: Zweidrahtleistung

- 100: Zweileiter-Feldgerät

## Patentansprüche

1. Zweileiter-Feldgerät (100) mit einem Messumformer (3) zur Erfassung einer Messgröße, einer Elektronikeinheit (5) zur Verarbeitung der Messdaten, einer Zweileiterschnittstelle (7) zur Energieversorgung des Zweileiter-Feldgeräts (100) und zur Kommunikation mit einer übergeordneten Einheit, wobei das Zweileiter-Feldgerät (100) eine visuell fernablesbaren Anzeigeeinheit (9) zur Signalisierung eines Zustands des Zweileiter-Feldgeräts (100) aufweist, welche aus einer Entfernung von wenigstens 1 m fernablesbar ist,
**dadurch gekennzeichnet, dass**
die Anzeigeeinheit (9) als RGB-Leuchtmittel, vorzugsweise RGB-Leuchtdiode, ausgebildet ist, und wobei die Anzeigeeinheit (9) mit einem Leuchtring (11) derart gekoppelt ist, dass das von der Anzeigeeinheit (9) erzeugte Licht optisch in den Leuchtring (11) eingekoppelt wird.

2. Zweileiter-Feldgerät (100) gemäß dem vorhergehenden Anspruch,
**dadurch gekennzeichnet, dass**
die Anzeigeeinheit (9) derart ausgebildet und angesteuert ist, dass zur Signalisierung des Zustands eine Vielzahl von Farben, vorzugsweise wenigstens 3 unterschiedliche Farben, weiter bevorzugt wenigstens 16 unterschiedliche Farben, weiter bevorzugt wenigstens 256 unterschiedliche Farben, erzeugbar sind.

3. Zweileiter-Feldgerät (100) gemäß einem der vorhergehenden Ansprüche, **dadurch gekennzeichnet, dass**
die Anzeigeeinheit (9) derart ausgebildet und angesteuert ist, dass eine Signalisierung des Zustands des Feldgeräts zusätzlich oder alternative durch blinken der Anzeigeeinheit (9) mit unterschiedlichen Frequenzen und/oder Sequenzen erfolgt.

4. Zweileiter-Feldgerät (100) gemäß einem der vorhergehenden Ansprüche, **dadurch gekennzeichnet, dass**
die Farben zur Signalisierung unterschiedlicher Zustände frei definierbar und/oder zuordenbar sind.

5. Zweileiter-Feldgerät (100) gemäß einem der vorhergehenden Ansprüche, **dadurch gekennzeichnet, dass**
der Leuchtring (11) als Teil eines Deckels (14) oder Gehäuses (13) des Zweileiter-Feldgeräts ausgebildet ist.

6. Zweileiter-Feldgerät (100) gemäß einem der vorhergehenden Ansprüche, **dadurch gekennzeichnet, dass**
Messumformer (3) als radiometrischer Sensor, Radarsensor, Vibrationssensor oder Drucksensor ausgebildet ist.

## Claims

1. A two-wire field device (100) having a measuring transducer (3) for detecting a measured variable, an electronic unit (5) for processing the measurement data, a two-wire interface (7) for supplying energy to the two-wire field device (100) and for communication with a superordinate unit, wherein the two-wire field device (100) has a visually remotely readable indicator unit (9) for signalling a state of the two-wire field device (100), which can be read remotely from a distance of at least 1 m,
**characterized in that**
the indicator unit (9) is designed as an RGB lamp, preferably an RGB light-emitting diode, and wherein the indicator unit (9) is coupled to a light ring (11) in such a way that the light generated by the indicator unit (9) is optically coupled into the light ring (11).

2. Two-wire field device (100) according to the preceding claim,
**characterized in that**
the indicator unit (9) is designed and controlled in such a way that a plurality of colours, preferably at least 3 different colours, more preferably at least 16 different colours, more preferably at least 256 different colours, can be generated to signal the state.

3. Two-wire field device (100) according to one of the preceding claims,
**characterized in that**
the indicator unit (9) is designed and controlled in such a way that the state of the field device is additionally or alternatively signalled by the indicator unit (9) flashing at different frequencies and/or sequences.

4. Two-wire field device (100) according to one of the preceding claims, **characterized in that** the colours for signalling different states are freely definable and/or assignable.

5. Two-wire field device (100) according to one of the preceding claims,
**characterized in that**
the light ring (11) is formed as part of a lid (14) or housing (13) of the two-wire field device.

6. Two-wire field device (100) according to one of the preceding claims,
**characterized in that**
the measuring transducer (3) is designed as a radiometric sensor, radar sensor, vibration sensor or pressure sensor.

## Revendications

1. Appareil de champ (100) à deux conducteurs avec un transducteur de mesure (3) pour la détection d'une grandeur de mesure, une unité électronique (5) pour le traitement des données de mesure, une interface (7) à deux conducteurs pour l'alimentation en énergie de l'appareil de champ (100) à deux conducteurs et pour la communication avec une unité supérieure, dans lequel l'appareil de champ (100) à deux conducteurs présente une unité d'affichage (9) lisible visuellement à distance pour signaler un état de l'appareil de champ (100) à deux conducteurs, qui peut être lue à distance à une distance d'au moins 1 m,
**caractérisé en ce que**
l'unité d'affichage (9) est réalisée en tant que élément lumineux RVB, de préférence en tant que diode électroluminescente RVB, et dans lequel l'unité d'affichage (9) est couplée à un anneau lumineux (11) de telle manière que la lumière générée par l'unité d'affichage (9) est injectée optiquement dans l'anneau lumineux (11).

2. Appareil de champ (100) à deux conducteurs selon la revendication précédente,
**caractérisé en ce que**
l'unité d'affichage (9) est réalisée et pilotée de telle manière qu'une pluralité de couleurs, de préférence au moins 3 couleurs différentes, de manière davantage préférée au moins 16 couleurs différentes, de manière davantage préférée au moins 256 couleurs différentes, peuvent être générées pour signaler l'état.

3. Appareil de champ (100) à deux conducteurs selon l'une quelconque des revendications précédentes,
**caractérisé en ce que**
l'unité d'affichage (9) est réalisée et pilotée de telle manière qu'une signalisation de l'état de l'appareil de champ s'effectue en supplément ou en variante par clignotement de l'unité d'affichage (9) à différentes fréquences et/ou séquences.

4. Appareil de champ (100) à deux conducteurs selon l'une quelconque des revendications précédentes,
**caractérisé en ce que**
les couleurs pour la signalisation de différents états peuvent être définies et/ou affectées librement.

5. Appareil de champ (100) à deux conducteurs selon l'une quelconque des revendications précédentes,
**caractérisé en ce que**
l'anneau lumineux (11) est réalisé comme faisant partie d'un couvercle (14) ou d'un boîtier (13) de l'appareil de champ à deux conducteurs.

6. Appareil de champ (100) à deux conducteurs selon l'une quelconque des revendications précédentes,
**caractérisé en ce que**
le transducteur de mesure (3) est réalisé comme un capteur radiométrique, un capteur radar, un capteur de vibrations ou un capteur de pression.
